# EUROPEAN PATENT SPECIFICATION

(11) **EP 3 614 707 B1**
(45) Date of publication and mention of the grant of the patent: **31.03.2021**
(21) Application number: 17908850.5
(22) Date of filing: 08.05.2017
(51) Int. Cl.: H04W 8/20, H04W 8/18, H04W 36/02, H04W 76/27

(54) **STATE SWITCHING METHOD AND APPARATUS**
ZUSTANDSUMSCHALTVERFAHREN UND -VORRICHTUNG
PROCÉDÉ ET APPAREIL DE COMMUTATION D'ÉTAT

(43) Date of publication of application: 26.02.2020
(73) Proprietor: Huawei Technologies Co., Ltd., Longgang District Shenzhen, Guangdong 518129 (CN)
(72) Inventor: YING, Jiangwei, Shenzhen, Guangdong 518129 (CN); YANG, Yanmei, Shenzhen, Guangdong 518129 (CN); DENG, Qiang, Shenzhen, Guangdong 518129 (CN)
(74) Representative: Gill Jennings & Every LLP
(86) International application number: PCT/CN2017/083515
(87) International publication number: WO 2018/205114

(56) References cited:
- EP-A1- 3 477 993
- WO-A1-2018/174524
- CN-A- 101 552 980
- CN-A- 104 144 524
- US-A1- 2010 115 275
- "3rd Generation Partnership Project; Technical Specification Group Services and System Aspects; Procedures for the 5G System; Stage 2 (Release 15)", 3GPP STANDARD ; TECHNICAL SPECIFICATION ; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.3.0, 20 April 2017 (2017-04-20), pages 1-116, XP051298172, [retrieved on 2017-04-20]
- ERICSSON: "23.502: Introduction of RRC Inactive state related procedures", 3GPP DRAFT; S2-172300-PCR-23502-INACTIVE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Busan, Korea; 20170327 - 20170331 27 March 2017 (2017-03-27), XP051257861, Retrieved from the Internet: URL:http://www.3gpp.org/ftp/tsg_sa/WG2_Arc h/TSGS2_120_Busan/Docs/ [retrieved on 2017-03-27]

## Description

### TECHNICAL FIELD

This application relates to the field of communications technologies, and in particular, to a status switching method and apparatus.

### BACKGROUND

The 5th Generation (the 5th Generation, 5G for short) communications system defines a communication mode, namely, a mobile initiated connection only (mobile initiated connection only, MICO for short) mode. In a registration process, a terminal negotiates the MICO mode with a network side. In a negotiation process, the network side may further instruct the terminal to register as an "all public land mobile network (public land mobile network, PLMN for short)" ("all PLMN") registration area. In MICO mode, only the terminal actively initiates an uplink service. When the terminal is in an idle state, the network side rejects any request for transmitting downlink data (including user plane data and control plane signaling). In addition, for the terminal in MICO mode and in the idle (CM-IDLE) state, the network side does not initiate a paging procedure for the terminal, and the terminal does not need to listen to paging (to be specific, the paging procedure). In addition, the "all PLMN" registration area means that the UE has registered in an entire PLMN network area, and the terminal does not need to re-register with the PLMN network due to mobility, in other words, the terminal does not need to initiate a registration procedure of a mobility registration update (mobility registration update) type.

In a 5G network, a terminal is switched from an idle (idle) state to a connected (connected) state by using a service request (namely, a service request) procedure, and may also activate a PDU session of the terminal by using a service request (namely, a service request) procedure, to transmit a data service. In the MICO mode, due to the reason mentioned above, to be specific, because the UE is in MICO mode and the "all PLMN" registration area is allocated to the UE, when the terminal needs to be switched from the idle state to the connected state and initiates a service request procedure, the terminal may have left a serving area of a source access and mobility management function (access and mobility management function, AMF) entity. As a result, the following problem is caused: there is no a context (namely, context) of the terminal in a new AMF entity, and therefore determines that the service request procedure fails, and requests the terminal to re-perform a registration request procedure. This increases a signaling procedure between the terminal and the network, brings unnecessary signaling overheads, and increases a delay of switching the terminal from the idle state to the connected state.

Publication titled, "3GPP Standard ; Technical Specification ; 3GPP TS 23.502", relates to procedures for the 5G system.

### SUMMARY

This application provides a status switching method and apparatus, to resolve a problem that signaling overheads increase when a terminal fails to perform a service request procedure in MICO mode.

Various aspects of the present disclosure have been defined in the independent claims. Further technical features of each of these aspects have been defined in the respective dependent claims.

According to certain aspects, after obtaining the context information of the terminal device, the first mobility management network element does not need to initiate a new registration request procedure, thereby reducing signaling interaction between the terminal device and a network, and reducing a delay of switching the terminal device from an idle state to a connected state.

According to certain aspects, an extending manner of obtaining the indication information and the identification information of the terminal device is provided, so that the obtaining manner is more flexible.

According to certain aspects, the indication information and the identification information of the terminal device are obtained by using the service request message or the registration request message, so that the obtaining manner is more flexible. According to certain aspects, the service type in the service request message is used as the indication information, so that the first mobility management network element can more flexibly obtain the indication information.

According to certain aspects, the registration type in the registration request message is used as the indication information, so that the first mobility management network element can more flexibly obtain the indication information.

According to certain aspects, the registration request message carries the PDU session identifier, to save signaling resources.

According to certain aspects, the registration request message carries the active flag, so that the first mobility management network element is clearer about a purpose of sending the registration request message by the UE.

According to certain aspects, after the second mobility management network element is determined based on the identification information, a UE context is obtained from the second mobility management network element. Therefore, there is no need to initiate a new registration request procedure, signaling interaction between the terminal device and the network is reduced, and a delay of switching the terminal device from the idle state to the connected state is reduced.

According to certain aspects, an indication manner of the indication information is provided, so that the design is more flexible.

### BRIEF DESCRIPTION OF DRAWINGS

FIG. 1 is a schematic diagram of an architecture of a sliced 5G network according to an embodiment of this application;
FIG. 2 is a schematic flowchart of a first status switching method according to an embodiment of this application;
FIG. 3 is a schematic flowchart of a second status switching method according to an embodiment of this application;
FIG. 4 is a schematic flowchart of a third status switching method according to an embodiment of this application;
FIG. 5 is a schematic flowchart of a fourth status switching method according to an embodiment of this application;
FIG. 6 is a schematic flowchart of a fifth status switching method according to an embodiment of this application;
FIG. 7 is a schematic flowchart of a sixth status switching method according to an embodiment of this application;
FIG. 8 is a schematic flowchart of a seventh status switching method according to an embodiment of this application;
FIG. 9 is a schematic structural diagram of a mobility management network element according to an embodiment of the present invention;
FIG. 10 is a schematic structural diagram of another mobility management network element according to an embodiment of the present invention;
FIG. 11 is a schematic structural diagram of a terminal device according to an embodiment of this application; and
FIG. 12 is a schematic structural diagram of another terminal device according to an embodiment of this application.

### DESCRIPTION OF EMBODIMENTS

The embodiments of this application may be applied to a mobile communications system such as a 5G communications system or a long term evolution (long term evolution, LTE for short) system.

The 5G communications system may be applied to applications of various industries, for example, mobile broadband, multimedia, machine type communication (machine type communication, MTC for short), industrial control, and an intelligent transportation system (intelligent transportation system, ITS for short). Currently, a 5G network is flexibly constructed. Specifically, network functions are separated, to be specific, a control plane (control plane, CP for short) function and a user plane (User Plane, UP for short) function are separated, and a mobility management (mobility management, MM for short) function and a session management (session management, SM for short) function in a CP are separated. In addition, a network slicing (network slicing) technology is proposed in 5G. In the network slicing technology, a physical network is divided into a plurality of virtual end-to-end networks, and the virtual networks (including a device, an access technology, a transmission path, and a core network in the network) are logically independent of each other. Each network slice includes an independent network function, or each network slice is obtained by instantiating a combination of functions, has different function features, and is oriented towards different requirements and services. Network slicing can make different users or user groups flexibly and dynamically define and customize network capabilities based on different application scenarios and requirements of the users or user groups.

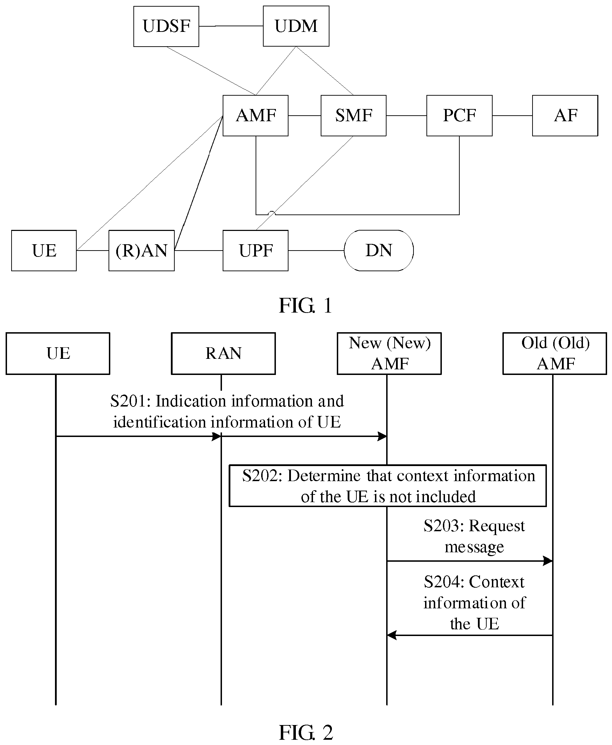

A network slice includes a control plane function (control plane function, CPF for short) entity and a user plane function (user plane function, UPF for short) entity. The CPF entity mainly implements an access control and mobility management function (access control and mobility management function, AMF for short) of a terminal device such as access authentication, security encryption, and location registration; and a session management function (session management function, SMF for short) such as establishing, releasing, and updating a user plane transmission path. The UPF entity mainly implements functions such as routing and forwarding user plane data. FIG. 1 is a schematic diagram of an architecture of a sliced 5G network according to an embodiment of this application. The 5G network architecture provided in this embodiment of this application mainly includes the following network function entities:
A (radio) access network (R)AN is a network that includes at least one 5G-RAN node, to implement a radio physical layer function, resource scheduling and radio resource management, radio access control, and a mobility management function. The 5G-RAN is connected to a UPF through a user plane interface N3, and is configured to transmit data of a terminal device. The 5G-RAN establishes a control plane signaling connection to an AMF through a control plane interface N2, to implement functions such as radio access bearer control. The 5G-RAN node may be specifically a base transceiver station (base transceiver station, BTS for short) in a global system for mobile communications (global system for mobile communications, GSM for short) or a code division multiple access (code division multiple access, CDMA for short) system, or may be a NodeB (NodeB) in a wideband code division multiple access (wideband code division multiple access, WCDMA for short) system, or may be an evolved NodeB (evolved NodeB, eNB or eNodeB for short) in an LTE system, or may be a base station device, a small cell device, a wireless access node (WiFi AP), a worldwide interoperability for microwave access base station (worldwide interoperability for microwave access base station, WiMAX BS for short), or the like in a future 5G network. This is not limited in this application.

The AMF is mainly responsible for functions such as UE authentication, UE mobility management, network slice selection, and SMF selection. The AMF serves as an anchor for a signaling connection between an interface N1 and the interface N2, and routes an N1/N2 SM message for an SMF. The AMF maintains and manages status information of user equipment (user equipment, UE for short).

The SMF is mainly responsible for all control plane functions of UE session management, including UPF selection, internet protocol (internet protocol, IP for short) address allocation, session quality of service (quality of service, QoS for short) management, obtaining a PCC policy from (a PCF), and the like.

The UPF serves as an anchor point of a protocol data unit (protocol data unit, PDU for short) session connection, and is responsible for filtering data packets of the user equipment, data transmission/forwarding, rate control, generating charging information, and the like.

The policy control function (policy control function, PCF for short) entity may also be referred to as a policy and charging rules function (policy and charging rules function, PCRF for short) entity. The PCF or the PCRF is responsible for policy control decision and flow-based charging control.

A user data management (user data management, UDM for short) entity may be referred to as a home subscriber server (home subscriber server, HSS for short). The user data management entity may also be corresponding to subscriber data management in English, and an abbreviation of the user data management entity may also be corresponding to SDM. The UDM, the SDM, or the HSS is used to help operators implement unified management on all user-related data.

A data network (data network, DN for short) provides a data transmission service for a user, and may be a PDN network such as the Internet (internet) or an IP multimedia service (IP multimedia service, IMS for short).

An application function (application function, AF for short) mainly performs dynamic policy/charging control on forwarding-plane behavior. The services need dynamic policy and charging control. The AF transmits dynamic session information required by the PCF, and receives specific information of an IP connectivity access network (IP-CAN) and acknowledgement of an IP-CAN bearer level event.

An unstructured data storage function (unstructured data storage function, UDSF for short) is used to store a UE context (UE context).

The user equipment (user equipment, UE for short) may be referred to a terminal, or may be referred to as an access terminal, a subscriber unit, a subscriber station, a mobile station, a mobile console, a remote station, a remote terminal, a mobile device, a user terminal, a wireless communications device, a user agent, a user apparatus, or the like. In FIG. 1, the UE is used as an example for description. The terminal may be a cellular phone, a cordless phone, a session initiation protocol (session initiation protocol, SIP for short) phone, a wireless local loop (wireless local loop, WLL for short) station, personal digital assistant (personal digital assistant, PDA for short), a handheld device with a wireless communication function, a computing device or another processing device connected to a wireless modem, an in-vehicle device, a wearable device, or an internet of things terminal device, for example, a fire detection sensor, a smart water meter or a smart meter, and a factory monitoring device.

It should be noted that "a plurality of" means two or more than two in this application. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although the terms such as first, second, and third may be used in the embodiments of this application to describe various messages, requests, and devices, descriptions of these messages, requests, and devices are not limited to these terms. These terms are merely used to differentiate between the messages, requests, and devices.

The embodiments of this application provide a status switching method and apparatus, and a manner of obtaining a context of a terminal in a MICO scenario is proposed. Specifically, when a terminal device in MICO mode needs to send uplink data, the terminal device sends indication information and identification information of the terminal device to a first mobility management network element, where the indication information is used to indicate that the terminal device is in MICO mode; and after the first mobility management network element obtains, form the terminal device, the indication information and the identification information of the terminal device, and determines that there is no context information of the terminal device in the first mobility management network element, the first mobility management network element requests the context information from a second mobility management network element based on the indication information and the identification information. According to the foregoing manner, after obtaining the context information of the terminal device, the first mobility management network element does not need to initiate a new registration request procedure, thereby reducing signaling interaction between the terminal device and a network, and reducing a delay of switching the terminal device from an idle state to a connected state.

In the embodiments of this application, an example in which a related mobility management network element is an AMF is used for description. When the terminal device is switched from the idle state to the connected state, the terminal device may have left a service area of an old/source (old/source) AMF entity. Therefore, the first mobility management network element is a new/target (new/target) AMF, and the second mobility management network element is an old/source (old/source) AMF. In the following embodiments, for ease of description, the second mobility management network element is collectively referred to as an old (old) AMF, and the first mobility management network element is collectively referred to as a new (new) AMF.

In the embodiments of this application, that the terminal device is switched from the idle state to the connected state may mean that a connection status of the terminal device is switched from the idle state to the connected state, or may mean that a PDU session of the terminal device is switched from a deactivated state to an activated state.

The following describes in detail solutions provided in the embodiments of this application with reference to accompanying drawings.

FIG. 2 is a schematic diagram of a status switching method according to an embodiment of this application.

S201: When UE in MICO mode needs to send uplink data, the UE sends indication information and identification information of the UE to a new AMF, where the indication information is used to indicate that the terminal device is in MICO mode. Optionally, the identification information of the UE may be information that identifies the UE uniquely and globally or information that temporarily identifies the UE uniquely and globally. For example, the information that identifies the UE uniquely and globally is a 5G-globally unique temporary identity (globally unique temporary UE identity, 5G-GUTI for short). In addition, in a 5G network, the information that identifies the UE uniquely and globally may also have another name. This is not limited in the present invention.

S202. After obtaining the indication information and the identification information of the terminal device from the UE, the new AMF determines that there is no context information of the UE in the new AMF.

S203. The new AMF requests the context information from an old AMF based on the indication information and the identification information, to be specific, the new AMF sends a request message to the old AMF, to request the context information of the UE. S204. After receiving the request message, the old AMF sends the context information of the UE to the new AMF, so that the new AMF obtains the context information of the UE.

Optionally, the UE may send the indication information and the identification information of the UE to the new AMF in a non-access stratum (non-access stratum, NAS for short) message or a non-NAS message.

It should be noted that, optionally, the indication information and the identification information of the UE may be sent by using a same message, or the indication information and the identification information of the UE may be sent by using different messages. For example, both the indication information and the identification information of the UE may be sent in NAS message or sent in non-NAS message. Alternatively, for the indication information and the identification information of the UE, one is sent in a NAS message, and the other is sent in a non-NAS message (for example, the indication information is sent in a NAS message, and an identifier of the UE is sent in a non-NAS message).

Optionally, a NAS message and a non-NAS message each include the indication information. Optionally, a NAS message and a non-NAS message each include the identifier of the UE. In this embodiment of this application, the non-NAS message includes RRC signaling between the UE and a RAN, and N2 interface signaling between the RAN and an AMF. The NAS message may be specifically a service request (service request) or a registration request (registration request). The NAS message may be sent to the RAN in a radio resource control (radio resource control, RRC for short) message, and the RAN sends the NAS message to the AMF by using the N2 interface signaling.

Optionally, the indication information is used to indicate that the terminal device is in MICO mode, and is further used to indicate that a registration area of the terminal device is an all public land mobile network PLMN registration area. Alternatively, the indication information includes first indication information and second indication information, the first indication information is used to indicate that the terminal device is in MICO mode, and the second indication information is used to indicate that a registration area of the terminal device is an all PLMN registration area.

Optionally, when the indication information is sent by using a NAS message, and the NAS message is a service request (service request) message, the indication information may be a service type in the service request message, and the service type is a MICO data service. Alternatively, the indication information that is used to indicate the MICO mode is an independent information element in the service request. Optionally, when the indication information is sent by using a non-NAS message, and the non-NAS message is a registration request (registration request) message, the indication information may be a registration type in the registration request message, and the registration type is MICO data registration. Alternatively, the indication information that is used to indicate the MICO mode is an independent information element in the registration request.

Optionally, the registration request may further carry an identifier of a packet data unit PDU session to-be-activated, for example, a PDU session ID. In this way, the AMF can learn of the PDU session that needs to be activated. Optionally, the registration request message further carries an active flag (active flag), and the active flag is used to indicate that the terminal device needs to send uplink data.

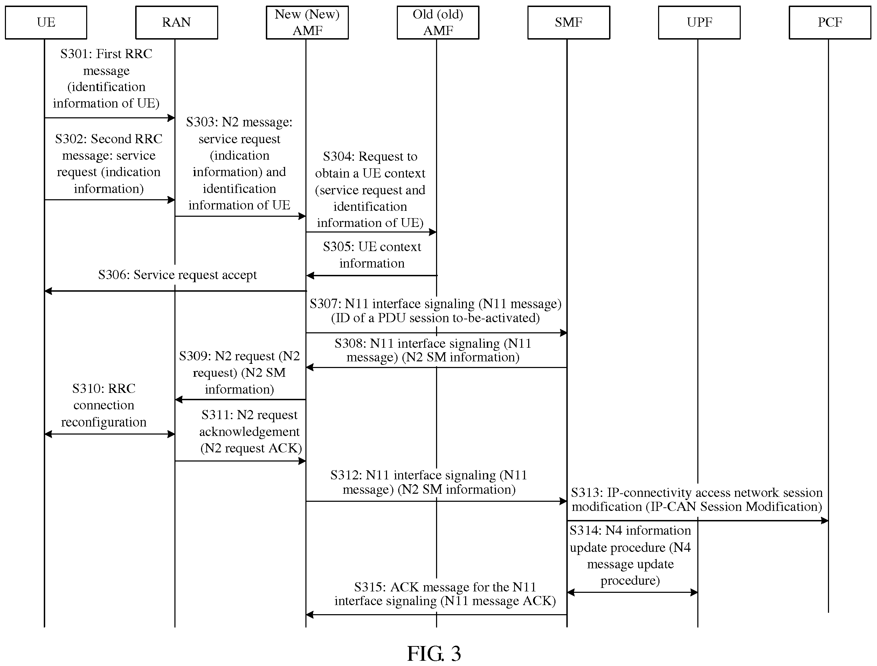

Referring to FIG. 3, an example in which UE adds indication information to a service request (service request) message (where the indication information is not indicated by using a service type) and sends the service request message to a new AMF is used. The new AMF identifies, based on the indication information, that the UE is in MICO mode, and when determining that a UE context is not stored locally, the new AMF does not perform a service request failure procedure, but triggers a UE context retrieving (UE context retrieve) procedure. When the indication information is further used to indicate that a registration area of the terminal device is an all PLMN registration area, the new AMF may further determine, based on the indication information, that the registration area of the UE is the all PLMN registration area. The UE reports identification information of the UE to a RAN by using an RRC message, and the RAN reports the identification information to the AMF.

S301. UE sends identification information of the UE to a RAN by using a first RRC message.

S302. The UE sends a service request (service request) to the RAN by using a second RRC message, where the service request carries indication information.

Optionally, the service request may further carry a PDU session ID (PDU session ID) (to be specific, an identifier of a PDU session to-be-activated).

The first RRC message and the second RRC message may be a same message or may be different messages.

S303. After receiving the identification information of the UE and the indication information, the RAN determines, based on the identification information of the UE, an old AMF serving the UE, and sends the identification information of the UE and the indication information to the old AMF. The RAN may send the identification information of the UE and the indication information to the old AMF by using an N2 message. If the RAN cannot connect, based on the identification information of the UE, to the old AMF serving the UE, the RAN may select a new AMF for the UE according to a policy for selecting an AMF, for example, according to load information of each AMF. In FIG. 3, an example in which the RAN cannot connect, based on the identification information of the UE, to the old AMF serving the UE is used, so that the RAN sends the identification information of the UE and the indication information to the new AMF. When the service request carries the ID of the PDU session to-be-activated, the RAN further sends the ID of the PDU session to-be-activated to the new AMF.

S304. If the new AMF identifies, based on the indication information, that the UE is in MICO mode, and if the new AMF determines that the context information of the UE is stored locally, the new AMF continues to perform a procedure of switching the UE from an idle state to a connected state; or if the new AMF determines that a UE context is not stored locally, the new AMF does not perform a service request failure procedure, but triggers a UE context retrieving procedure, to be specific, the new AMF determines the old AMF based on the identification information of the UE, and sends a request (for example, a UE context request) to the old AMF to obtain the UE context. The UE context request carries the identification information of the UE and a service request message. When the indication information is further used to indicate that a registration area of the terminal device is an all PLMN registration area, the new AMF may further determine, based on the indication information, that the registration area of the UE is the all PLMN registration area.

Alternatively, when determining that the context information of the UE is not stored locally, the new AMF may further send a request to a UDSF to obtain the context information of the UE.

Optionally, after receiving the UE context request, the old AMF may perform security verification on the service request message (security verification of service request). If the verification succeeds, the old AMF returns the UE context to the new AMF. Alternatively, after receiving the UE context request, the old AMF directly returns the UE context to the new AMF.

S305. The old AMF returns the UE context to the new AMF. For example, the old AMF returns the UE context to the new AMF by using a UE context response (UE context response) message.

Optionally, after receiving the UE context sent by the old AMF, the new AMF may further perform S306.

S306. The new AMF sends a service request accept (service request accept) message to the UE.

Alternatively, the new AMF may send the service request accept (service request accept) message to the UE by using an N2 message in step S309 and an RRC message in S310.

Optionally, the method further includes the following steps.

S307. The new AMF sends, by using N11 interface signaling (N11 message), the ID of the PDU session to-be-activated to a corresponding SMF based on the PDU session ID (PDU session ID) (to be specific, the identifier of the PDU session to-be-activated) indicated by the UE, so that the SMF activates the PDU session.

S308. The SMF returns N2 SM information to the new AMF by using N11 interface signaling, where the N2 SM information includes QoS information (QoS profile) and core network N3 tunnel information (CN N3 Tunnel Info). The CN N3 tunnel Info is used by the RAN to correctly send data of the UE to a corresponding UPF. The QoS profile includes QoS parameter information corresponding to all QoS flows (QoS flow) of the PDU session corresponding to the PDU session ID, and is used by the RAN to establish an air interface bearer.

S309. The new AMF sends, by using N2 interface signaling (N2 message), the N2 SM information received from the SMF and other information (for example, a security context, and a handover restriction list Handover Restriction List) to the RAN. For example, the N2 message is an N2 request.

S310. The RAN performs an RRC connection reconfiguration (RRC Connection Reconfiguration) procedure with the UE based on the QoS profile of the PDU sessions to-be-activated, and establish a secure connection between the UE and the RAN.

S311. The RAN returns N2 SM information (information) to the new AMF by using an N2 request ACK (acknowledgement) message. The N2 SM information includes N3 tunnel information (N3 Tunnel info), a list of accepted QoS flows of activated PDU sessions (list of accepted QoS Flows for the activated PDU Sessions), and a list of rejected QoS flows of the activated PDU sessions (list of rejected QoS Flows for the activated PDU Sessions).

S312. The new AMF sends the N2 SM information to the corresponding SMF. Specifically, the new AMF sends the N2 SM information to the corresponding SMF by using N11 interface signaling (N11 message).

Optionally, if a dynamic policy control and charging (policy control and charging, PCC for short) policy is deployed, S313 is performed, to be specific, the SMF may initiate an IP-connectivity access network session modification (IP-connectivity access network session modification, IP-CAN session modification).

S314. The SMF and the UPF perform an N4 information update procedure (N4 information update procedure), and specifically, the RAN N3 tunnel information is configured on the UPF, where the RAN N3 tunnel information is used by the UPF to correctly send data of the UE to the corresponding RAN.

Optionally, after the SMF and the UPF perform the N4 information update procedure, S315 is performed.

S315. The SMF returns, to the new AMF, an ACK message (N11 message ACK) corresponding to the N11 interface signaling in S312.

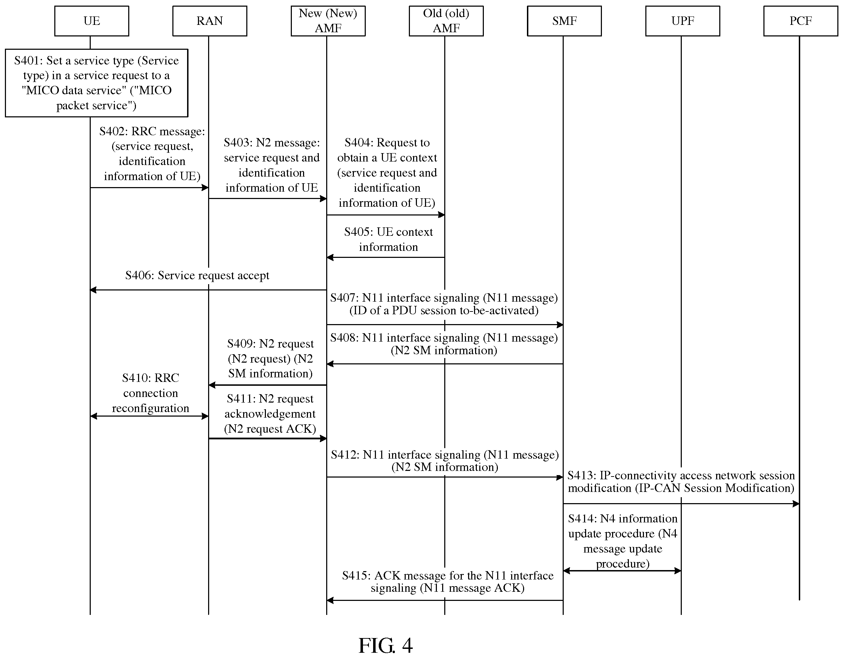

Referring to FIG. 4, an example in which UE adds indication information to a service request (service request) message (where the indication information is indicated by using a service type) and sends the service request message to a new AMF is used. The new AMF identifies, based on the service type, that the UE is in MICO mode, and when determining that a UE context is not stored locally, the new AMF does not perform a service request failure procedure, but triggers a UE context retrieving (UE context retrieve) procedure. The UE reports identification information of the UE to a RAN by using an RRC message, and the RAN reports the identification information to the AMF. When the indication information is further used to indicate that a registration area of the terminal device is an all PLMN registration area, the new AMF may further determine, based on the indication information, that the registration area of the UE is the all PLMN registration area.

S401. When UE is in MICO mode and triggers uplink data transmission, the UE sets a service type (service type) in a service request to a "MICO data service" ("MICO data service").

S402. The UE sends the service request (service request) and identification information of the UE to a RAN by using an RRC message. In this embodiment, an example in which the UE sends the service request and the identification information of the UE to the RAN by using a same RRC message is used.

Optionally, the service request may further carry an ID of a PDU session (PDU session ID) to-be-activated (to be specific, an identifier of the PDU session to-be-activated).

S403. After receiving the identification information of the UE and the service request, the RAN determines, based on the identification information of the UE, an old AMF serving the UE, and sends the identification information of the UE and indication information to the old AMF. The RAN may send the identification information of the UE and the indication information to the old AMF by using an N2 message. If the RAN cannot connect, based on the identification information of the UE, to the old AMF serving the UE, the RAN may select a new AMF for the UE according to a preconfigured policy for selecting an AMF, for example, according to load information of each AMF. In FIG. 4, an example in which the RAN cannot connect, based on the identification information of the UE, to the old AMF serving the UE is used, so that the RAN sends the identification information of the UE and the indication information to the new AMF. When the service request carries the ID of the PDU session to-be-activated, the RAN further sends the ID of the PDU session to-be-activated to the new AMF.

S404. If the new AMF identifies, based on the service type (MICO packet service) in the service request, that the UE is in MICO mode, and if the new AMF determines that the context information of the UE is stored locally, the new AMF continues to perform a procedure of switching the UE from an idle state to a connected state; or if the new AMF determines that a UE context is not stored locally, the new AMF does not perform a service request failure procedure, but triggers a UE context retrieving procedure, to be specific, the new AMF determines the old AMF based on the identification information of the UE, and sends a request (for example, a UE context request) to the old AMF to obtain the UE context. The UE context request carries the identification information of the UE and a service request message.

Alternatively, when determining that the context information of the UE is not stored locally, the new AMF may further send a request to a UDSF to obtain the context information of the UE.

Optionally, after receiving the UE context request, the old AMF may perform security verification on the service request message (security verification of service request). If the verification succeeds, the old AMF returns the UE context to the new AMF. Alternatively, after receiving the UE context request, the old AMF directly returns the UE context to the new AMF.

S405. The old AMF returns the UE context to the new AMF.

Optionally, after receiving the UE context sent by the old AMF, the new AMF may further perform S406.

S406. The new AMF sends a service request accept (service request accept) message to the UE.

Optionally, the method further includes steps S407 to S415. For steps S407 to S415, refer to steps S307 to S315 in FIG. 3. Details are not described herein again.

Optionally, when the new AMF sends the service request accept (service request accept) message to the UE, the new AMF may also send the service request accept (service request accept) message to the UE by using an N2 message in step S409 and an RRC message in S410.

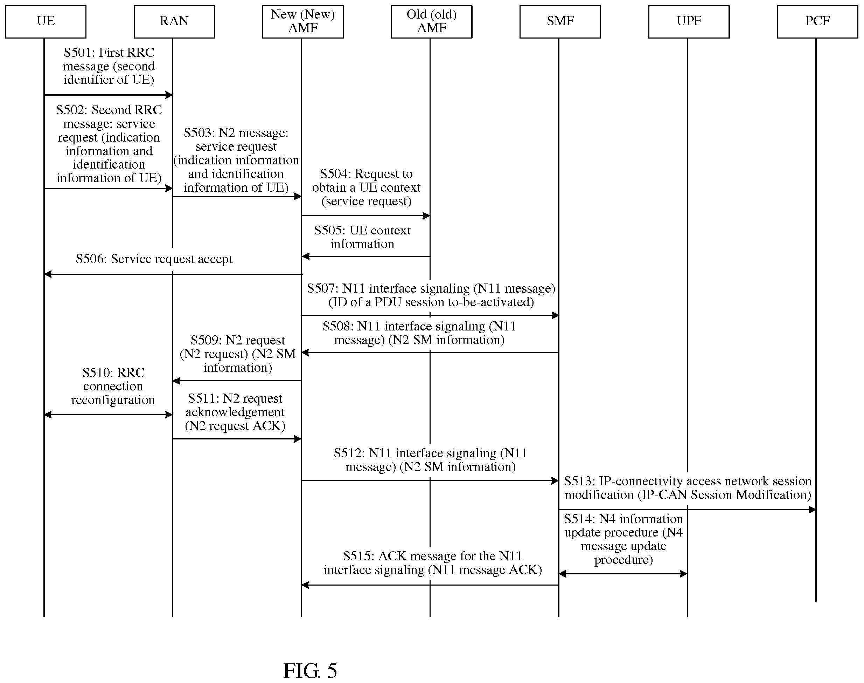

Referring to FIG. 5, an example in which UE adds indication information and identification information of the UE to a service request (service request) message (where the indication information is not indicated by using a service type) and sends the service request message to a new AMF is used. The new AMF identifies, based on the indication information, that the UE is in MICO mode, and when determining that a UE context is not stored locally, the new AMF does not perform a service request failure procedure, but triggers a UE context retrieving (UE context retrieve) procedure. The UE sends a second identifier (for example, a 5G S-TMSI) of the UE to a RAN by using an RRC message, where the second identifier is used by the RAN to select an AMF. When the indication information is further used to indicate that a registration area of the terminal device is an all PLMN registration area, the new AMF may further determine, based on the indication information, that the registration area of the UE is the all PLMN registration area.

S501. UE sends a second identifier (for example, a 5G serving-temporary mobile subscriber identity (serving-temporary mobile subscriber identity, S-TMSI for short)) of the UE to a RAN by using a first RRC message. The second identifier is used by the RAN to select an AMF.

S502. The UE sends a service request (service request) to the RAN by using a second RRC message, where the service request carries indication information and identification information of the UE.

Optionally, the service request may further carry a PDU session ID (PDU session ID) (to be specific, an identifier of a PDU session to-be-activated).

The first RRC message and the second RRC message may be a same message or may be different messages.

S503. After receiving the service request and the second identifier of the UE, the RAN determines, based on the identification information of the UE in the service request, an old AMF serving the UE, and sends the identification information of the UE and the indication information to the old AMF. The RAN may send the identification information of the UE and the indication information to the old AMF by using an N2 message. If the RAN cannot connect, based on the identification information of the UE, to the old AMF serving the UE, the RAN may select a new AMF based on the second identifier, or select a new AMF for the UE according to a policy for selecting an AMF, for example, according to load information of each AMF. In FIG. 5, an example in which the RAN cannot connect, based on the identification information of the UE, to the old AMF serving the UE is used. The RAN sends the identification information of the UE and the indication information to the new AMF. When the service request carries the ID of the PDU session to-be-activated, the RAN further sends the ID of the PDU session to-be-activated to the new AMF.

S504. If the new AMF identifies, based on the indication information, that the UE is in MICO mode, and if the new AMF determines that the context information of the UE is stored locally, the new AMF continues to perform a procedure of switching the UE from an idle state to a connected state; or if the new AMF determines that a UE context is not stored locally, the new AMF does not perform a service request failure procedure, but triggers a UE context retrieving procedure, to be specific, the new AMF determines the old AMF based on the identification information of the UE, and sends a request (for example, a UE context request) to the old AMF to obtain the UE context. The UE context request carries the identification information of the UE and a service request message. When the indication information is further used to indicate that a registration area of the terminal device is an all PLMN registration area, the new AMF may further determine, based on the indication information, that the registration area of the UE is the all PLMN registration area.

Alternatively, when determining that the context information of the UE is not stored locally, the new AMF may further send a request to a UDSF to obtain the context information of the UE.

Optionally, after receiving the UE context request, the old AMF may perform security verification on the service request message (security verification of service request). If the verification succeeds, the old AMF returns the UE context to the new AMF. Alternatively, after receiving the UE context request, the old AMF directly returns the UE context to the new AMF.

S505. The old AMF returns the UE context to the new AMF. For example, the old AMF returns the UE context to the new AMF by using a UE context response (UE context response) message.

Optionally, after receiving the UE context sent by the old AMF, the new AMF may further perform S506.

S506. The new AMF sends a service request accept (service request accept) message to the UE.

Alternatively, the new AMF may send the service request accept (service request accept) message to the UE by using an N2 message in step S509 and an RRC message in S510.

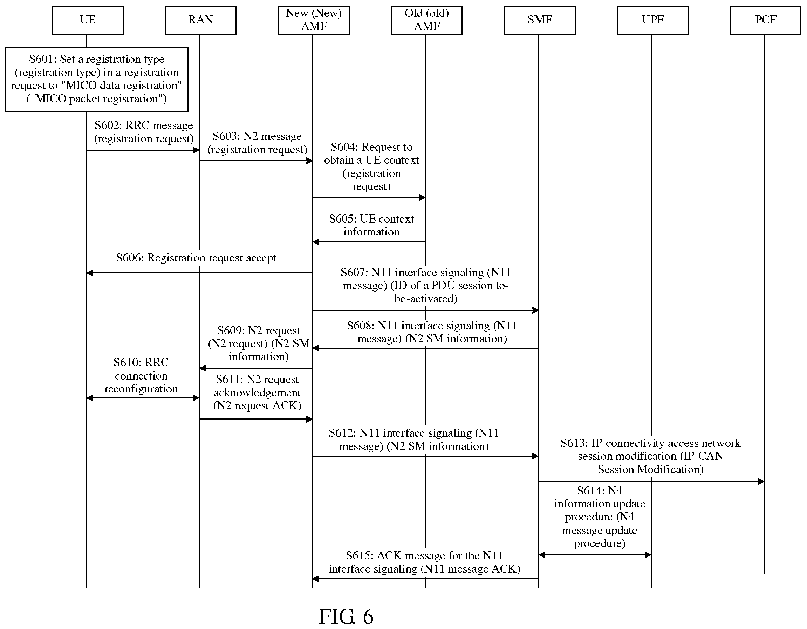

Optionally, the method may further include S507 to S515. For details of steps S507 to S515, refer to steps S307 to S315 in FIG. 3. Details are not described herein again. Referring to FIG. 6, an example in which UE adds indication information and an identifier of the UE to a registration request message (where the indication information is indicated by using a registration type) and sends the registration request message to a new AMF is used. If the new AMF identifies, based on the indication information, that the UE is in MICO mode, the new AMF skips allocating a tracking area list (tracking area list, TA list for short) to the UE, and when determining that a UE context is not stored locally, the new AMF triggers a UE context retrieving (UE context retrieve) procedure. When the indication information is further used to indicate that a registration area of the terminal device is an all PLMN registration area, the new AMF may further determine, based on the indication information, that the registration area of the UE is the all PLMN registration area.

S601. When UE is in MICO mode and triggers uplink data transmission, the UE sets a registration type (registration type) in a registration request to "MICO data registration" ("MICO packet registration"), where the registration request may further carry identification information of the UE.

S602. The UE sends a registration request (registration request) to a RAN by using an RRC message. The UE may also notify, by using the RRC message, the RAN of information (for example, a 5G-GUAMFI (globally unique AMF ID)) that uniquely identifies an AMF. Optionally, the information that uniquely identifies the AMF may also be an identifier 5G-GUTI of the UE because the 5G-GUTI includes the 5G-GUAMFI.

Optionally, the registration request may further carry an ID of a PDU session (PDU session ID) to-be-activated (to be specific, an identifier of the PDU session to-be-activated).

Optionally, the registration request may further carry an active flag (active flag), and the active flag is used to indicate that the UE needs to send uplink data.

S603. After receiving the registration request, the RAN determines, based on the information that uniquely identifies the AMF and that is sent by the UE, an old AMF serving the UE, and sends the identification information of the UE and indication information to the old AMF. The RAN may send the identification information of the UE and the indication information to the old AMF by using an N2 message.

If the RAN cannot connect, based on the information that uniquely identifies the AMF, to the old AMF serving the UE, the RAN may select a new AMF for the UE according to a policy for selecting an AMF, for example, according to load information of each AMF. In FIG. 6, an example in which the RAN cannot connect, based on the identification information of the UE, to the old AMF serving the UE is used, so that the RAN sends the registration information (the identification information of the UE and the indication information (registration type)) to the new AMF. When the registration request carries the ID of the PDU session to-be-activated, the RAN further sends the ID of the PDU session to-be-activated to the new AMF.

S604. If the new AMF identifies, based on the registration type (MICO Packet registration) in the registration request, that the UE is in MICO mode, and if the new AMF determines that the context information of the UE is stored locally, the new AMF continues to perform a procedure of switching the UE from an idle state to a connected state; or if the new AMF determines that a UE context is not stored locally, the new AMF triggers a UE context retrieving procedure, to be specific, the new AMF determines the old AMF based on the identification information of the UE, and sends a request (for example, a UE context request) to the old AMF to obtain the UE context.

The UE context request carries the identification information of the UE and a registration request message. When the indication information is further used to indicate that a registration area of the terminal device is an all PLMN registration area, the new AMF may further determine, based on the indication information, that the registration area of the UE is the all PLMN registration area.

Alternatively, when determining that the context information of the UE is not stored locally, the new AMF may further send a request to a UDSF to obtain the context information of the UE.

Optionally, after receiving the UE context request, the old AMF may perform security verification on the registration request message (security verification of registration request). If the verification succeeds, the old AMF returns the UE context to the new AMF. Alternatively, after receiving the UE context request, the old AMF directly returns the UE context to the new AMF.

S605. The old AMF returns the UE context to the new AMF.

Optionally, after receiving the UE context sent by the old AMF, the new AMF may further perform S606.

S606. The new AMF sends a registration request accept (registration request accept) message to the UE.

Optionally, the method further includes steps S607 to S615. For steps S607 to S615, refer to steps S307 to S315 in FIG. 3. Details are not described herein again.

Optionally, when the new AMF sends the registration request accept (registration request accept) message to the UE, the new AMF may also send the registration request accept (registration request accept) message to the UE by using an N2 message in step S609 and an RRC message in S610.

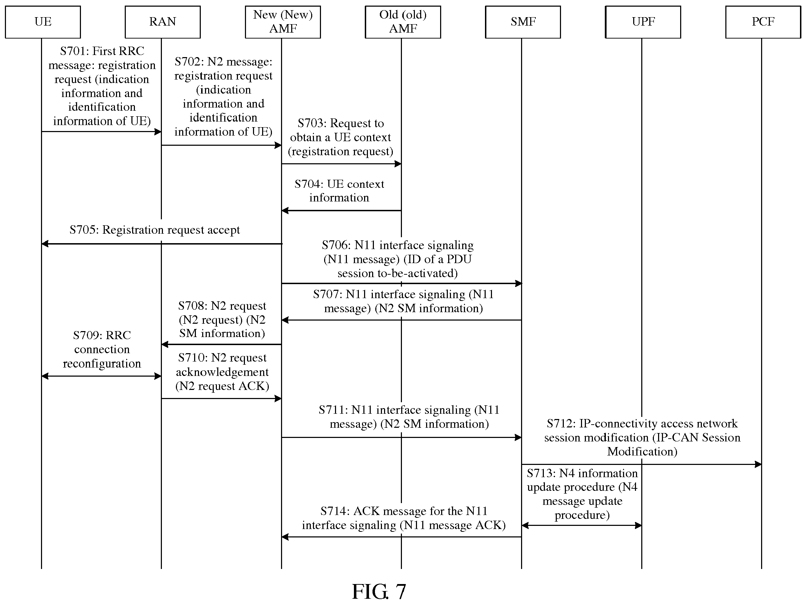

Referring to FIG. 7, an example in which UE adds indication information and an identifier of the UE to a registration request message (where the indication information is not indicated by using a registration type) and sends the registration request message to a new AMF is used. If the new AMF identifies, based on the indication information, that the UE is in MICO mode, the new AMF skips allocating a tracking area list (tracking area list, TA list for short) to the UE, and when determining that a UE context is not stored locally, the new AMF triggers a UE context retrieving (UE context retrieve) procedure. When the indication information is further used to indicate that a registration area of the terminal device is an all PLMN registration area, the new AMF may further determine, based on the indication information, that the registration area of the UE is the all PLMN registration area.

S701. UE sends a registration request (registration request) to a RAN by using an RRC message, where the registration request carries indication information and identification information of the UE.

The UE may also notify, by using the RRC message, the RAN of information (for example, a 5G-GUAMFI (globally unique AMF ID)) that uniquely identifies an AMF. Optionally, the information that uniquely identifies the AMF may also be an identifier 5G-GUTI of the UE because the 5G-GUTI includes the 5G-GUAMFI.

Optionally, the registration request may further carry an ID of a PDU session (PDU session ID) to-be-activated (to be specific, an identifier of the PDU session to-be-activated).

Optionally, the registration request may further carry an active flag (active flag), and the active flag is used to indicate that the UE needs to send uplink data.

S702. After receiving the registration request, the RAN determines, based on the information that uniquely identifies the AMF and that is sent by the UE, an old AMF serving the UE, and sends the identification information of the UE and the indication information to the old AMF. The RAN may send the identification information of the UE and the indication information to the old AMF by using an N2 message. If the RAN cannot connect, based on the information that uniquely identifies the AMF, to the old AMF serving the UE, the RAN may select a new AMF for the UE according to a policy for selecting an AMF, for example, according to load information of each AMF. In FIG. 7, an example in which the RAN cannot connect, based on the identification information of the UE, to the old AMF serving the UE is used, so that the RAN sends the identification information of the UE and the indication information to the new AMF. When the registration request carries the ID of the PDU session to-be-activated, the RAN further sends the ID of the PDU session to-be-activated to the new AMF.

S703. If the new AMF identifies, based on the indication information in the registration request, that the UE is in MICO mode, and if the new AMF determines that the context information of the UE is stored locally, the new AMF continues to perform a procedure of switching the UE from an idle state to a connected state; or if the new AMF determines that a UE context is not stored locally, the new AMF triggers a UE context retrieving procedure, to be specific, the new AMF determines the old AMF based on the identification information of the UE, and sends a request (for example, a UE context request) to the old AMF to obtain the UE context. The UE context request carries the identification information of the UE and a registration request message. When the indication information is further used to indicate that a registration area of the terminal device is an all PLMN registration area, the new AMF may further determine, based on the indication information, that the registration area of the UE is the all PLMN registration area.

Alternatively, when determining that the context information of the UE is not stored locally, the new AMF may further send a request to a UDSF to obtain the context information of the UE.

Optionally, after receiving the UE context request, the old AMF may perform security verification on the registration request message (security verification of registration request). If the verification succeeds, the old AMF returns the UE context to the new AMF. Alternatively, after receiving the UE context request, the old AMF directly returns the UE context to the new AMF.

S704. The old AMF returns the UE context to the new AMF.

Optionally, after receiving the UE context sent by the old AMF, the new AMF may further perform S705.

S705. The new AMF sends a registration request accept (registration request accept) message to the UE.

Optionally, the method further includes steps S706 to S714. For steps S706 to S714, refer to steps S307 to S315 in FIG. 3. Details are not described herein again.

Optionally, when the new AMF sends the service request accept (service request accept) message to the UE, the new AMF may also send the service request accept (service request accept) message to the UE by using an N2 message in step S708 and an RRC message in S709.

In the embodiments of this application, when a terminal device in MICO mode needs to send uplink data, the terminal device may further send an identifier of a PDU session to-be-activated and identification information of the terminal device to a first mobility management network element. After the first mobility management network element obtains, from the terminal device, the identifier of the PDU session to-be-activated and the identification information of the terminal device, and determines that there is no context information of the terminal device in the first mobility management network element, the first mobility management network element requests the context information from a second mobility management network element based on the identification information. The first mobility management network element activates, based on the identifier of the PDU session to-be-activated, the PDU session corresponding to the PDU session identifier for the terminal device. According to the foregoing method, after obtaining the context information of the terminal device, the first mobility management network element does not need to initiate a new registration request procedure, thereby reducing signaling interaction between the terminal device and a network, and reducing a delay of switching the terminal device from an idle state to a connected state.

It should be noted that, optionally, the identifier of the PDU session to-be-activated and the identification information of the UE may be sent by using a same message, or the identifier of the PDU session to-be-activated and the identification information of the UE may be sent by using different messages. For example, both the identifier of the PDU session to-be-activated and the identification information of the UE may be sent in NAS message or sent in non-NAS message. Alternatively, for the identifier of the PDU session to-be-activated and the identification information of the UE, one is sent in a NAS message, and the other is sent in a non-NAS message (for example, the identifier of the PDU session to-be-activated is sent in a NAS message, and an identifier of the UE is sent in a non-NAS message). For example, when obtaining, from the terminal device, the identifier of the packet data unit PDU session to-be-activated and the identification information of the terminal device, the first mobility management network element may obtain the identifier of the PDU session to-be-activated and the identification information of the terminal device from a registration request message sent by a base station, in other words, the UE adds the identifier of the PDU session to-be-activated and the identification information of the UE to the registration request message, and sends the registration request message to the first mobility management network element by using the base station.

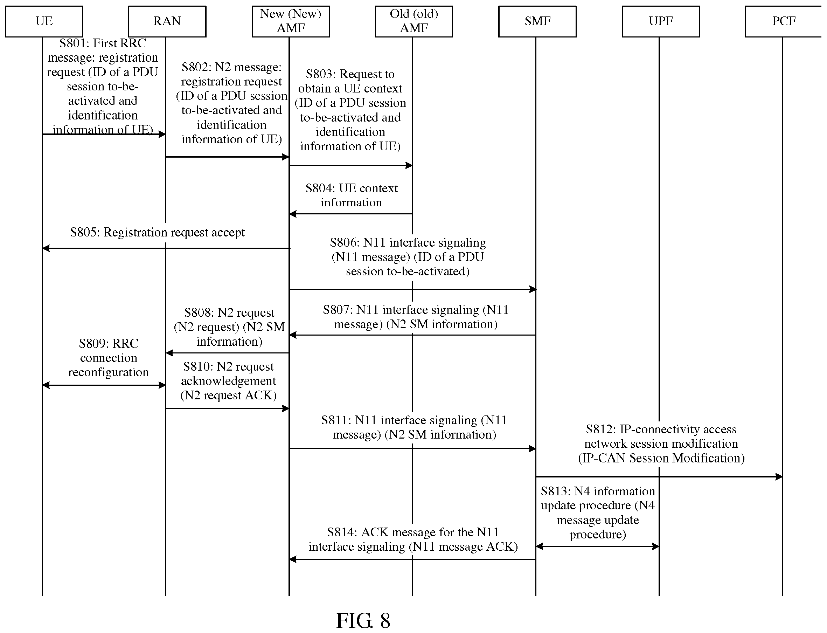

As shown in FIG. 8, an example in which UE adds an identifier of a PDU session to-be-activated and an identifier of the UE to a registration request message and sends the registration request message to a new AMF is used. When determining that the registration request message includes the identifier of the PDU session to-be-activated, the new AMF needs to activate the PDU session for the UE. When determining that a UE context is not stored locally, the new AMF triggers a UE context retrieving (UE context retrieve) procedure. When indication information is further used to indicate that a registration area of the terminal device is an all PLMN registration area, the new AMF may further determine, based on the indication information, that the registration area of the UE is the all PLMN registration area.

S801. UE sends a registration request (registration request) to a RAN by using an RRC message, where the registration request carries an identifier of a PDU session to-be-activated (for example, PDU session ID) and identification information of the UE.

The UE may also notify, by using the RRC message, the RAN of information (for example, a 5G-GUAMFI (globally unique AMF ID)) that uniquely identifies an AMF. Optionally, the information that uniquely identifies the AMF may also be an identifier 5G-GUTI of the UE because the 5G-GUTI includes the 5G-GUAMFI.

Optionally, the registration request may further carry an active flag (active flag), and the active flag is used to indicate that the UE needs to send uplink data.

S802. After receiving the registration request, the RAN determines, based on the information that uniquely identifies the AMF and that is sent by the UE, an old AMF serving the UE, and sends the identification information of the UE and indication information to the old AMF. The RAN may send the identification information of the UE and the indication information to the old AMF by using an N2 message.

If the RAN cannot connect, based on the information that uniquely identifies the AMF, to the old AMF serving the UE, the RAN may select a new AMF for the UE according to a policy for selecting an AMF, for example, according to load information of each AMF. In FIG. 8, an example in which the RAN cannot connect, based on the identification information of the UE, to the old AMF serving the UE is used, so that the RAN sends the identification information of the UE and the identifier of the PDU session to-be-activated to the new AMF.

S803. After receiving the identifier of the PDU session to-be-activated and the identification information of the UE, the new AMF determines whether context information of the UE is stored locally; if the new AMF determines that the context information of the UE is stored locally, the new AMF continues to perform a procedure of switching the UE from an idle state to a connected state; or if the new AMF determines that a UE context is not stored locally, the new AMF triggers a UE context retrieving procedure, to be specific, the new AMF determines the old AMF based on the identification information of the UE, and sends a request (for example, a UE context request) to the old AMF to obtain the UE context. The UE context request carries the identification information of the UE and a registration request message. When the indication information is further used to indicate that a registration area of the terminal device is an all PLMN registration area, the new AMF may further determine, based on the indication information, that the registration area of the UE is the all PLMN registration area.

Alternatively, when determining that the context information of the UE is not stored locally, the new AMF may further send a request to a UDSF to obtain the context information of the UE.

Optionally, after receiving the UE context request, the old AMF may perform security verification on the registration request message (security verification of registration request). If the verification succeeds, the old AMF returns the UE context to the new AMF. Alternatively, after receiving the UE context request, the old AMF directly returns the UE context to the new AMF.

S804. The old AMF returns the UE context to the new AMF.

Optionally, after receiving the UE context sent by the old AMF, the new AMF may further perform S805.

S805. The new AMF sends a registration request accept (registration request accept) message to the UE.

Optionally, the method further includes steps S806 to S814. For steps S806 to S814, refer to steps S307 to S315 in FIG. 3. Details are not described herein again.

Optionally, when the new AMF sends the registration request accept (registration request accept) message to the UE, the new AMF may also send the registration request accept (registration request accept) message to the UE by using an N2 message in step S808 and an RRC message in S809.

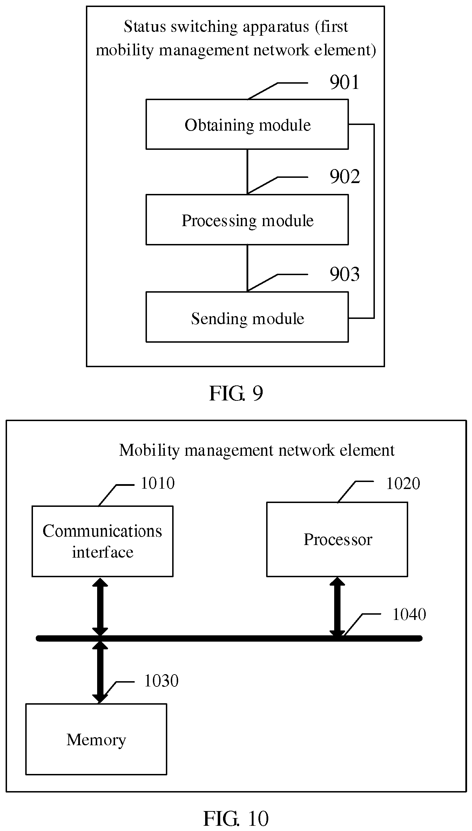

Based on the same inventive concept as the foregoing method embodiments, an embodiment of this application provides a status switching apparatus. The status switching apparatus is applied to a first mobility management network element. Referring to FIG. 9, the apparatus may implement the data transmission method performed by the new AMF shown in FIG. 2 to FIG. 8, and the apparatus includes:
an obtaining module 901, configured to obtain, from a terminal device, indication information and identification information of the terminal device, where the indication information is used to indicate that the terminal device is in mobile initiated connection only MICO mode;
a processing module 902, configured to determine that there is no context information of the terminal device in the first mobility management network element; and
a sending module 903, configured to: when the processing module 902 determines that there is no context information of the terminal device in the first mobility management network element, request the context information from a second mobility management network element based on the indication information and the identification information.

In a possible implementation, the obtaining module 901 is specifically configured to receive a request message from a base station. The request message carries the indication information and the identification information.

In a possible implementation, the request message is a service request message or a registration request message.

In a possible implementation, the indication information is a service type in the service request message, and the service type is a MICO data service.

In a possible implementation, the indication information is a registration type in the registration request message, and the registration type is MICO data registration.

In a possible implementation, the registration request message further carries an identifier of a to-be-activated packet data unit PDU session.

In a possible implementation, the registration request message further carries an active flag, and the active flag is used to indicate that the terminal device needs to send uplink data.

In a possible implementation, the identification information is used to identify the terminal device uniquely and globally.

In a possible implementation, the processing module 902 is further configured to: determine, based on the indication information, that the context information needs to be requested; and determine, the second mobility management network element based on the identification information; and the sending module 903 is specifically configured to send a UE context request to the second mobility management network element.

In a possible implementation, the indication information is further used to indicate that a registration area of the terminal device is an all public land mobile network PLMN registration area. Alternatively, the indication information includes first indication information and second indication information, the first indication information is used to indicate that the terminal device is in mobile initiated connection only MICO mode, and the second indication information is used to indicate that a registration area of the terminal device is an all public land mobile network PLMN registration area.

Optionally, the obtaining module 901 is configured to obtain, from the terminal device, an identifier of a packet data unit PDU session to-be-activated and identification information of the terminal device. The processing module 902 is configured to determine that there is no context information of the terminal device in the first mobility management network element. The sending module 903 is configured to: when the processing module 902 determines that there is no context information of the terminal device in the first mobility management network element, request the context information from the second mobility management network element based on the identification information. The processing module 902 is further configured to activate, based on the identifier of the PDU session to-be-activated, the PDU session corresponding to the PDU session identifier for the terminal device.

In a possible implementation, the activating the PDU session corresponding to the PDU session identifier for the terminal device includes: sending, by the first mobility management network element, the identifier of the PDU session to-be-activated to a session management network element, so that the session management network element activates the PDU session.

In a possible implementation, that the first mobility management network element obtains, from the terminal device, an identifier of a packet data unit PDU session to-be-activated and identification information of the terminal device includes: The first mobility management network element receives a registration request message from the base station, where the registration request message carries the identifier of the PDU session to-be-activated and the identification information of the terminal device.

In a possible implementation, the registration request message further carries an active flag, and the active flag is used to indicate that the terminal device needs to send uplink data.

Module division in this embodiment of this application is an example, is merely logical function division, and may be other division in actual implementation. In addition, function modules in the embodiments of this application may be integrated into one processor, or each of the modules may exist alone physically, or two or more modules are integrated into one module. The integrated module may be implemented in a form of hardware, or may be implemented in a form of a software function module.

As shown in FIG. 10, a status switching apparatus applied to a first mobility management network element may include a communications interface 1010, a processor 1020, and a memory 1030. Hardware of entities corresponding to the module shown in FIG. 9 may be the processor 1020. The processor 1020 receives/transmits data by using the communications interface 1010, and is configured to implement the method performed by the new AMF in FIG. 2 to FIG. 8. In an implementation process, steps in a processing procedure may be performed by an integrated logic circuit of hardware in the processor 1020, or by a software instruction. The processor 1020 may be a general purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in the embodiments of this application. The general purpose processor may be a microprocessor, any conventional processor, or the like. The steps of the methods disclosed with reference to the embodiments of this application may be directly performed by a hardware processor, or may be performed by using a combination of hardware and software modules in the processor. Program code that is executed by the processor 1020 to implement the foregoing methods may be stored in the memory 1030. The memory 1030 may be a non-volatile memory, for example, a hard disk drive (hard disk drive, HDD for short) or a solid-state drive (solid-state drive, SSD for short), or may be a volatile memory (volatile memory), for example, a random-access memory (random-access memory, RAM for short). The memory 1030 is any other medium that can be configured to carry or store desirable program code that has an instruction or a data structure form, and that can be accessed by a computer, but is not limited thereto.

In this embodiment of this application, a specific connection medium between the communications interface 1010, the processor 1020, and the memory 1030 is not limited. In this embodiment of this application, in FIG. 10, the memory 1030, the processor 1020, and the communications interface 1010 are connected by using a bus 1040, and the bus is represented by using a bold line. A connection manner between other components is merely used as an example for description, and does not limit the present invention. The bus may be classified into an address bus, a data bus, a control bus, and the like. For ease of indication, the bus is indicated by using only one bold line in FIG. 10. However, it does not indicate that there is only one bus or only one type of bus.

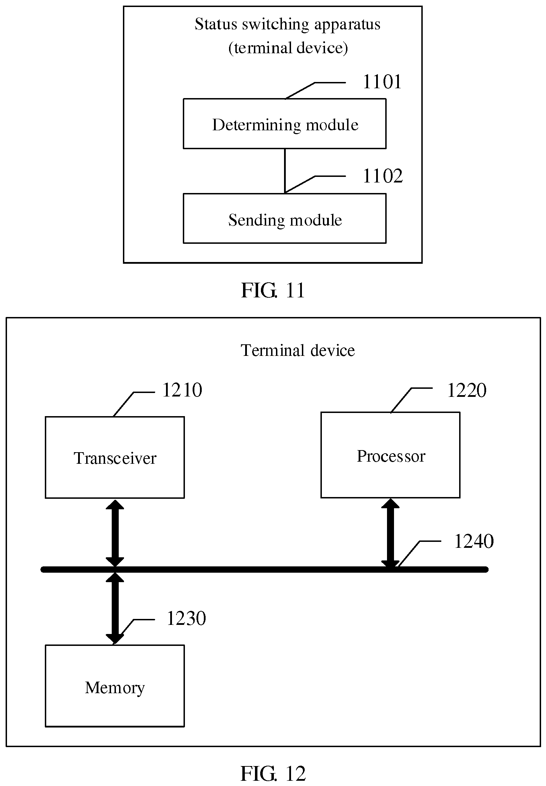

Based on the same inventive concept as the foregoing method embodiments, an embodiment of this application provides a status switching apparatus. The status switching apparatus is applied to a terminal device. Referring to FIG. 11, the apparatus may implement the data transmission method performed by the UE shown in FIG. 2 to FIG. 8, and the apparatus includes:
a determining module 1101, configured to learn that the terminal device is in mobile initiated connection only MICO mode; and
a sending module 1102, configured to: when the terminal device needs to send uplink data, send indication information and identification information of the terminal device to a first mobility management network element, where the indication information is used to indicate that the terminal device is in MICO mode.

In a possible implementation, the sending module 1102 is specifically configured to send a radio resource control RRC message to the first mobility management network element by using a base station. The RRC message carries the indication information. In a possible implementation, the sending module 1102 is specifically configured to send a radio resource control RRC message to the first mobility management network element by using the base station. The RRC message carries the identification information of the terminal device.

In a possible implementation, the identification information is used to identify the terminal device uniquely and globally.

In a possible implementation, the indication information is further used to indicate that a registration area of the terminal device is an all public land mobile network PLMN registration area. Alternatively, the indication information includes first indication information and second indication information, the first indication information is used to indicate that the terminal device is in mobile initiated connection only MICO mode, and the second indication information is used to indicate that a registration area of the terminal device is an all public land mobile network PLMN registration area.

In a possible implementation, the sending module 1102 is specifically configured to send a request message to the first mobility management network element. The request message carries the indication information and/or the identification information of the terminal device, and the request message is a service request message or a registration request message.

In a possible implementation, the indication information is a service type in the service request message, and the service type is a MICO data service.

In a possible implementation, the indication information is a registration type in the registration request message, and the registration type is MICO data registration.

In a possible implementation, the registration request message further carries an identifier of a packet data unit PDU session to-be-activated.

In a possible implementation, the registration request message further carries an active flag, and the active flag is used to indicate that the terminal device needs to send uplink data.

Module division in this embodiment of this application is an example, is merely logical function division, and may be other division in actual implementation. In addition, function modules in the embodiments of this application may be integrated into one processor, or each of the modules may exist alone physically, or two or more modules are integrated into one module. The integrated module may be implemented in a form of hardware, or may be implemented in a form of a software function module.

As shown in FIG. 12, a status switching apparatus applied to a terminal device may include a transceiver 1210, a processor 1220, and a memory 1230. Hardware of entities corresponding to the modules shown in FIG. 11 may be the processor 1220. The processor 1220 receives/transmits data by using the transceiver 1210, and is configured to implement the method performed by the UE in FIG. 2 to FIG. 8. In an implementation process, steps in a processing procedure may be performed by an integrated logic circuit of hardware in the processor 1220, or by a software instruction. The processor 1220 may be a general purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in the embodiments of this application. The general purpose processor may be a microprocessor, any conventional processor, or the like. The steps of the methods disclosed with reference to the embodiments of this application may be directly performed by a hardware processor, or may be performed by using a combination of hardware and software modules in the processor. Program code that is executed by the processor 1220 to implement the foregoing methods may be stored in the memory 1230. The memory 1230 may be a non-volatile memory, for example, a hard disk drive (hard disk drive, HDD for short) or a solid-state drive (solid-state drive, SSD for short), or may be a volatile memory (volatile memory), for example, a random-access memory (random-access memory, RAM for short). The memory 1230 is any other medium that can be configured to carry or store desirable program code that has an instruction or a data structure form, and that can be accessed by a computer, but is not limited thereto.

In this embodiment of this application, a specific connection medium between the transceiver 1210, the processor 1220, and the memory 1230 is not limited. In this embodiment of this application, in FIG. 12, the memory 1230, the processor 1220, and the transceiver 1210 are connected by using a bus 1240, and the bus is represented by using a bold line in FIG. 12. A connection manner between other components is merely used as an example for description, and does not limit the present invention. The bus may be classified into an address bus, a data bus, a control bus, and the like. For ease of indication, the bus is indicated by using only one bold line in FIG. 12. However, it does not indicate that there is only one bus or only one type of bus. Based on the foregoing embodiments, an embodiment of this application further provides a computer storage medium. The storage medium stores a software program, and when the software program is read and executed by one or more processors, the status switching method provided in the foregoing embodiments can be implemented. The computer storage medium may include any medium that can store program code, such as a USB flash drive, a removable hard disk, a read-only memory (read-only Memory, ROM), a random-access memory (random-access Memory, RAM), a magnetic disk, or an optical disc.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a magnetic disk storage, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each procedure and/or each block in the flowcharts and/or the block diagrams, and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of the another programmable data processing device generate an apparatus for implementing a specified function in one or more procedures in the flowcharts and/or in one or more blocks in the block diagrams.

These computer program instructions may alternatively be stored in a computer readable memory that can instruct the computer or the another programmable data processing device to work in a specific manner, so that the instructions stored in the computer readable memory generate an artifact that includes an instruction apparatus. The instruction apparatus implements a specified function in one or more procedures in the flowcharts and/or in one or more blocks in the block diagrams.

These computer program instructions may alternatively be loaded onto the computer or the another programmable data processing device, so that a series of operations and steps are performed on the computer or the another programmable device, thereby generating computer-implemented processing. Therefore, the instructions executed on the computer or the another programmable device provide steps for implementing a specified function in one or more procedures in the flowcharts and/or in one or more blocks in the block diagrams.

Obviously, a person skilled in the art can make various modifications and variations to the embodiments of this application without departing from the scope of the embodiments of this application. This application is intended to cover these modifications and variations provided that they fall within the scope of protection defined by the following claims.

## Claims

1. A method, comprising:
obtaining (S601-S603), by a new access and mobility management function, AMF a registration request message from a terminal device, wherein the registration request message comprises identification information of the terminal device and an identifier of a packet data unit, PDU session to-be-activated when the terminal device in mobile initiated connection only, MICO mode needs to send uplink data;
determining whether context information of the terminal device is stored locally;
if there is no context information of the terminal device stored locally in the new AMF, requesting (S604), by the new AMF, the context information from the old AMF based on the identification information; and
sending (S607), by the new AMF, the identifier of the PDU session to-be-activated to a session management network element to activate the PDU session.

2. The method according to claim 1, wherein the obtaining, by a new access and mobility management function, AMF a registration request message from a terminal device comprises:
receiving, by the new AMF, the registration request message from a base station.

3. The method according to claim 2, wherein the registration request message further carries an active flag, and the active flag is used to indicate that the terminal device needs to send uplink data.

4. An apparatus, comprising:
an obtaining module (901), configured to obtain, from a terminal device, a registration request message, wherein the registration request message comprises identification information of the terminal device and an identifier of a packet data unit, PDU session to-be-activated when the terminal device in mobile initiated connection only, MICO mode needs to send uplink data;
a processing module (902), configured to determining whether context information of the terminal device is stored locally; and
a sending module (903), configured to: when the processing module determines that there is no context information of the terminal device stored locally, request the context information from the old AMF based on the identification information; and
the processing module, configured to instruct the sending module to send the identifier of the PDU session to-be-activated to the old AMF to activate the PDU session.

5. The apparatus according to claim 4, wherein the obtaining module is configured to receive the registration request message from a base station.

6. The apparatus according to claim 5, wherein the registration request message further carries an active flag, and the active flag is used to indicate that the terminal device needs to send uplink data.

## Patentansprüche

1. Verfahren, umfassend:
Erhalten (S601-S603), durch eine neue Zugriffs- und Mobilitätsverwaltungsfunktion, AMF, einer Registrierungsanforderungsnachricht von einer Endgerätevorrichtung, wobei die Registrierungsanforderungsnachricht Identifizierungsinformationen der Endgerätevorrichtung und eine Kennung einer Paketdateneinheit-(PDU-)Sitzung umfasst, die zu aktivieren ist, wenn die Endgerätevorrichtung im Mobile-Initiated-Connection-Only-(MICO-)Modus Uplink-Daten senden muss;
Bestimmen, ob Kontextinformationen der Endgerätevorrichtung lokal gespeichert sind;
wenn keine Kontextinformationen der Endgerätevorrichtung in der neuen AMF lokal gespeichert sind, Anfordern (S604), durch die neue AMF, der Kontextinformationen von der alten AMF basierend auf den Identifizierungsinformationen; und
Senden (S607), durch die neue AMF, der Kennung der zu aktivierenden PDU-Sitzung an ein Sitzungsverwaltungsnetzwerkelement, um die PDU-Sitzung zu aktivieren.

2. Verfahren nach Anspruch 1, wobei das Erhalten, durch eine neue Zugriffs- und Mobilitätsverwaltungsfunktion, AMF, einer Registrierungsanforderungsnachricht von einer Endgerätevorrichtung Folgendes umfasst:
Empfangen, durch die neue AMF, der Registrierungsanforderungsnachricht von einer Basisstation.

3. Verfahren nach Anspruch 2, wobei die Registrierungsanforderungsnachricht ferner eine aktive Markierung trägt, und die aktive Markierung verwendet wird, um anzugeben, dass die Endgerätevorrichtung Uplink-Daten senden muss.

4. Vorrichtung, umfassend:
ein Erhaltungsmodul (901), das konfiguriert ist, um von einer Endgerätevorrichtung eine Registrierungsanforderungsnachricht zu erhalten, wobei die Registrierungsanforderungsnachricht Identifizierungsinformationen der Endgerätevorrichtung und eine Kennung einer Paketdateneinheit-(PDU-)Sitzung umfasst, die zu aktivieren ist, wenn die Endgerätevorrichtung im Mobile-Initiated-Connection-Only-(MICO-)Modus Uplink-Daten senden muss;
ein Verarbeitungsmodul (902), das konfiguriert ist, um zu bestimmen, ob Kontextinformationen der Endgerätevorrichtung lokal gespeichert sind; und
ein Sendemodul (903), das für Folgendes konfiguriert ist: wenn das Verarbeitungsmodul bestimmt, dass keine Kontextinformationen der Endgerätevorrichtung lokal gespeichert sind, Anfordern der Kontextinformationen von der alten AMF basierend auf den Identifizierungsinformationen; und
das Verarbeitungsmodul, das konfiguriert ist, um das Sendemodul anzuweisen, die Kennung der zu aktivierenden PDU-Sitzung an die alte AMF zu senden, um die PDU-Sitzung zu aktivieren.

5. Vorrichtung nach Anspruch 4, wobei das Erhaltungsmodul konfiguriert ist, um die Registrierungsanforderungsnachricht von einer Basisstation zu empfangen.

6. Vorrichtung nach Anspruch 5, wobei die Registrierungsanforderungsnachricht ferner eine aktive Markierung trägt und die aktive Markierung verwendet wird, um anzugeben, dass die Endgerätevorrichtung Uplink-Daten senden muss.

## Revendications

1. Procédé, comprenant :
l'obtention (S601-S603), par une nouvelle fonction de gestion d'accès et de mobilité, AMF, d'un message de demande d'enregistrement provenant d'un dispositif terminal, dans lequel le message de demande d'enregistrement comprend des informations d'identification du dispositif terminal et un identifiant d'une session d'unité de données par paquets, PDU, devant être activée lorsque le dispositif terminal en mode de connexion initialisée par mobile uniquement, MICO, doit envoyer des données de liaison montante ;
la détermination du fait que des informations de contexte du dispositif terminal sont ou ne sont pas stockées localement ;
s'il n'existe pas d'informations de contexte du dispositif terminal stockées localement dans la nouvelle AMF, la demande (S604), par la nouvelle AMF, des informations de contexte provenant de l'ancienne AMF sur la base des informations d'identification ; et
l'envoi (S607), par la nouvelle AMF, de l'identifiant de la session de PDU devant être activée à un élément de réseau de gestion de session pour activer la session de PDU.

2. Procédé selon la revendication 1, dans lequel l'obtention, par une nouvelle fonction de gestion d'accès et de mobilité, AMF, d'un message de demande d'enregistrement provenant d'un dispositif terminal comprend :
la réception, par la nouvelle AMF, du message de demande d'enregistrement provenant d'une station de base.

3. Procédé selon la revendication 2, dans lequel le message de demande d'enregistrement porte en outre un indicateur actif, et l'indicateur actif est utilisé pour indiquer que le dispositif terminal doit envoyer des données de liaison montante.

4. Appareil, comprenant :
un module d'obtention (901), conçu pour obtenir, d'un dispositif terminal, un message de demande d'enregistrement, dans lequel le message de demande d'enregistrement comprend des informations d'identification du dispositif terminal et un identifiant d'une session d'unité de données par paquets, PDU, devant être activée lorsque le dispositif terminal en mode de connexion initialisée par mobile uniquement, MICO, doit envoyer des données de liaison montante ;
un module de traitement (902), conçu pour déterminer si des informations de contexte du dispositif terminal sont stockées localement ; et
un module d'envoi (903), conçu pour : demander, lorsque le module de traitement détermine qu'il n'existe pas d'informations de contexte du dispositif terminal stockées localement, les informations de contexte provenant de l'ancienne AMF sur la base des informations d'identification ; et
le module de traitement, conçu pour donner l'instruction au module d'envoi d'envoyer l'identifiant de la session de PDU devant être activée à l'ancienne AMF pour activer la session de PDU.

5. Appareil selon la revendication 4, dans lequel le module d'obtention est conçu pour recevoir le message de demande d'enregistrement provenant d'une station de base.

6. Appareil selon la revendication 5, dans lequel le message de demande d'enregistrement porte en outre un indicateur actif, et l'indicateur actif est utilisé pour indiquer que le dispositif terminal doit envoyer des données de liaison montante.
